# EUROPEAN PATENT APPLICATION

(11) **EP 4 368 414 A1**
(43) Date of publication of application: **15.05.2024**
(21) Application number: 24150266.5
(22) Date of filing: 08.10.2018
(51) Int. Cl.: B60C 7/08, B60C 7/10, B60C 7/14

(54) **NON-PNEUMATIC TIRE WITH WEB HAVING VARIABLE THICKNESS**

(30) Priority: 10.10.2017 US 201762570147 P
(62) Divisional of application: 18865603.7
(71) Applicant: Bridgestone Americas Tire Operations, LLC, Nashville, TN 37201 (US)
(72) Inventor: KNOSPE, Benjamin D., Merrill, 54452 (US)
(74) Representative: Marks & Clerk LLP

(57) **Abstract**

A non-pneumatic tire includes a generally annular inner ring that attaches to a wheel, a generally annular outer ring, and an interconnected web between the generally annular inner ring and the generally annular outer ring. The interconnected web defines a plurality of openings circumferentially spaced around the tire and radially spaced at varying distances from an axis of rotation, so as to support a load by working in tension. The interconnected web includes a plurality of web elements having a varying thickness, including a first plurality of web elements above the axis of rotation and a second plurality of web elements below the axis of rotation. The varying thickness is configured to facilitate buckling of the interconnected web. When a load is applied, the first plurality of web elements are subjected to a tensile force while the second plurality of web elements buckle.

## Description

### FIELD OF THE INVENTION

The present disclosure is directed to a tire, and more particularly, to a non-pneumatic tire.

### BACKGROUND

Non-pneumatic, or airless, tires (NPT) have previously been made of an entirely solid substance. These solid tires made the ride rather uncomfortable for passengers and caused greater damage to the suspension of a vehicle, which had to compensate for the lack of "give" in a solid tire.

More recently, NPTs have employed spokes or webbing extending between an inner ring and an outer ring. By way of example, U.S. Published Application 2006/0113016 by Cron, et al., and assigned to Michelin, discloses a non-pneumatic tire that it commercially refers to as the Tweel^{™}. In the Tweel^{™}, the tire combines with the wheel. It is made up of four parts that are eventually bonded together: the wheel, a spoke section, a reinforced annular band that surrounds the spoke section, and a rubber tread portion that contacts the ground.

### SUMMARY OF THE INVENTION

In one embodiment a non-pneumatic tire includes a generally annular inner ring having an axis of rotation, a deformable generally annular outer ring, and a flexible interconnected web extending between the inner and the outer ring. The interconnected web includes at least two radially adjacent layers of web elements at every radial cross-section of the tire. The web elements define a plurality of generally polygonal openings and include a plurality of radial web elements that are angled relative to a plane that extends radially through the axis of rotation and a plurality of distinct tangential web elements that are generally transverse to the radial plane. Each generally polygonal opening is defined by a plurality of vertices. Each of the plurality of vertices is defined by a transitional element that varies a thickness of an associated web element along at least a portion of a length of the web element. The transitional element is selected from the group consisting of a radius, an elliptical transition, and a spline. When load is applied, a substantial amount of the load is supported by a plurality of the web elements working in tension. A plurality of the radial web elements in a region above the axis of rotation are subjected to a tensile force while at least some of the radial web elements in a region between the load and a footprint region buckle and a plurality of the tangential web elements distribute the load through the flexible interconnected web.

In another embodiment a method of designing a non-pneumatic tire includes a step of providing a generally annular inner ring having an axis of rotation, a step of providing a deformable generally annular outer ring, and a step of connecting the inner ring to the outer ring with a flexible interconnected web having at least two radially adjacent layers of web elements at every radial cross-section of the tire. The web elements define a plurality of generally polygonal openings having a plurality of vertices, and the web elements include a plurality of radial web elements that are angled relative to a plane that extends radially through the axis of rotation and a plurality of distinct tangential web elements that are generally transverse to the radial plane. The step of connecting the inner ring to the outer ring includes selecting a thickness of each web element such that when a load is applied, a substantial amount of the load is supported by a plurality of the web elements working in tension. A plurality of the radial web elements in a region above the axis of rotation are subjected to a tensile force while at least some of the radial web elements in a region between the load and a footprint region buckle and a plurality of the tangential web elements distribute the load through the flexible interconnected web. The step of connecting the inner ring to the outer ring includes selecting a transitional element for each of the plurality of vertices, such that a thickness of an associated web element is varied along at least a portion of a length of the web element.

In yet another embodiment a non-pneumatic tire includes a generally annular inner ring that attaches to a wheel, a generally annular outer ring, and an interconnected web between the generally annular inner ring and the generally annular outer ring. The interconnected web defines a plurality of openings circumferentially spaced around the tire and radially spaced at varying distances from an axis of rotation, so as to support a load by working in tension. The interconnected web includes a plurality of web elements having a varying thickness, including a first plurality of web elements above the axis of rotation and a second plurality of web elements below the axis of rotation. The varying thickness is configured to facilitate buckling of the interconnected web. When a load is applied, the first plurality of web elements are subjected to a tensile force while the second plurality of web elements buckle.

### BRIEF DESCRIPTION OF THE DRAWINGS

In the accompanying drawings, structures are illustrated that, together with the detailed description provided below, describe exemplary embodiments of the claimed invention. Like elements are identified with the same reference numerals. It should be understood that elements shown as a single component may be replaced with multiple components, and elements shown as multiple components may be replaced with a single component. The drawings are not to scale and the proportion of certain elements may be exaggerated for the purpose of illustration.
**Figure 1** is a front view of an undeformed nonpneumatic tire.
**Figure 2** is a front view of the non-pneumatic tire of **Figure 1** being deformed when subjected to a load.
**Figure 3** is a sectional perspective view of the undeformed non-pneumatic tire taken along line **3-3** in **Figure 1****.**
**Figure 4** is a front view of another embodiment of an undeformed non-pneumatic tire.
**Figure 5** is a front view of yet another embodiment of an undeformed non-pneumatic tire.
**Figure 6** is a front view of still another embodiment of an undeformed non-pneumatic tire.
**Figure 7** is a front view of yet another embodiment of an undeformed non-pneumatic tire.
**Figure 8** is a front view of still another embodiment of an undeformed non-pneumatic tire.
**Figure 9** is a front view of yet another embodiment of an undeformed non-pneumatic tire.
**Figure 10A** is a front view of yet another embodiment of an undeformed non-pneumatic tire.
**Figure 10B** is a detail view of a web of the undeformed non-pneumatic tire of **Figure 10A****.**
**Figure 10C** is a perspective view of a lower portion of the web of **Figure 10A** being deformed when subjected to a load.
**Figure 11A** is a detail view of a web of another embodiment of an undeformed non-pneumatic tire with a web having a variable thickness defined by a radius at each vertex.
**Figure 11B** is a perspective view of a lower portion of the web of **Figure 11A** being deformed when subjected to a load.
**Figure 12** is a perspective view of a web portion of another embodiment of a non-pneumatic tire, wherein the web has a variable thickness defined by a larger radius at each vertex.
**Figure 13A** is a detail view of a web of yet another embodiment of an undeformed non-pneumatic tire, wherein the web has a variable thickness defined by an elliptical transition at each vertex.
**Figure 13B** is a perspective view of a lower portion of the web of **Figure 13A** being deformed when subjected to a load.
**Figure 14A** is a detail view of a web of yet another embodiment of an undeformed non-pneumatic tire, wherein the web has a variable thickness defined by a variable transition at each vertex.
**Figure 14B** is a perspective view of a lower portion of the tire of **Figure 14A** being deformed when subjected to a load.
**Figure 14C** is a detail view of the area **C** of **Figure 14A****.**
**Figure 14D** is a detail view of the area **D** of **Figure 14A****.**
**Figure 14E** is a detail view of the area **E** of **Figure 14A****.**
**Figure 14F** is a detail view of the area **F** of **Figure 14A****.**

### DETAILED DESCRIPTION

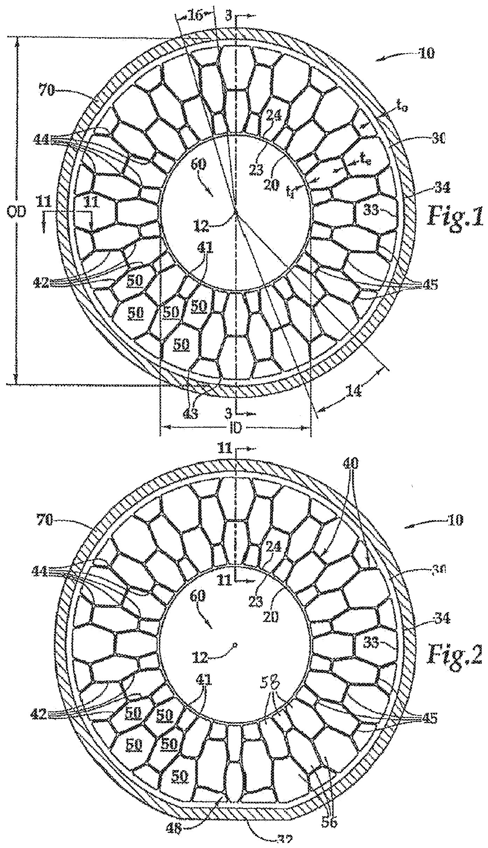

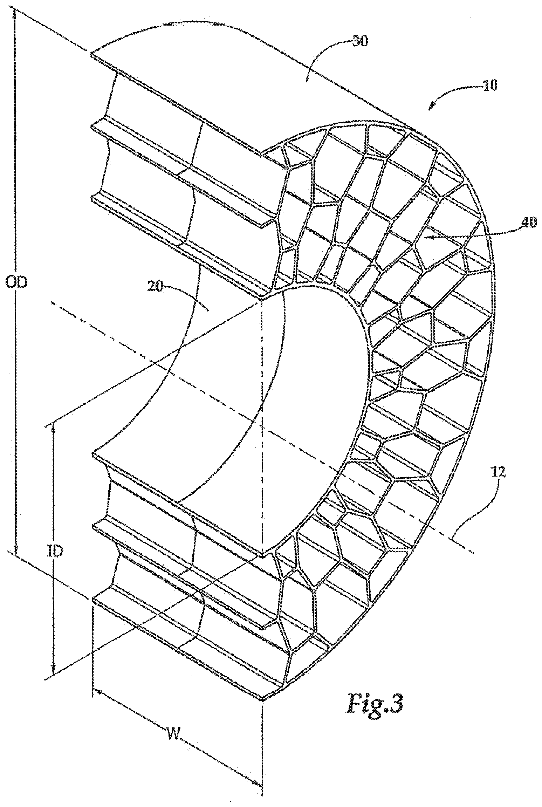

**Figures 1, 2****,** and **3** illustrate one embodiment of a non-pneumatic tire **10.** In the illustrated embodiment, the non-pneumatic tire **10** includes a generally annular inner ring **20** that engages a wheel **60** to which tire **10** is mounted. The wheel **60** has an axis of rotation **12** about which tire **10** spins. The generally annular inner ring **20** comprises an internal surface **23** and an external surface **24** and can be made of cross-linked or uncross-linked polymers. In one embodiment, the generally annular inner ring **20** can be made of a thermoplastic material such as a thermoplastic elastomer, a thermoplastic urethane, or a thermoplastic vulcanizate. In another embodiment, the generally annular inner ring **20** can be made of rubber, polyurethane, or other suitable material. In this application, the term "polymer" means cross-linked or uncross-linked polymers.

For smaller applied loads, the generally annular inner ring **20** can be adhesively engaged with wheel **60** or can undergo some chemical structure change allowing it to bond to the wheel **60.** For larger applied loads, the generally annular inner ring **20** can be engaged to the wheel **60** via some form of a mechanical connection such as a mating fit, although a mechanical connection can be used for supporting smaller loads as well. The mechanical engagement can provide both the wheel **60** and the generally annular inner ring **20** with extra strength to support the larger applied load. In addition, a mechanical connection has the added benefit of ease of interchangeability. For example, if the non-pneumatic tire **10** needs to be replaced, generally annular inner ring **20** can be detached from wheel **60** and replaced. The wheel **60** can then be remounted to the axle of the vehicle, allowing the wheel **60** to be reusable. In another embodiment, the inner ring **20** can be connected to the wheel **60** by a combination of a mechanical and adhesive connection.

With continued reference to **Figures 1, 2** and **3****,** the non-pneumatic tire **10** further comprises a generally annular outer ring **30** surrounding an interconnected web **40** (discussed below). The outer ring **30** can be configured to deform in an area around and including a footprint region **32** (see **Figure 2**), which decreases vibration and increases ride comfort. However, since in some embodiments the non-pneumatic tire **10** does not have a sidewall, the generally annular outer ring **30,** combined with the interconnected web **40,** can also add lateral stiffness to the tire **10** so that the tire **10** does not unacceptably deform in portions away from the footprint region **32.**

In one embodiment, the generally annular inner ring **20** and a generally annular outer ring **30** are made of the same material as interconnected web **40.** For example, in one embodiment the inner ring, outer ring, and interconnected web are all comprised of a urethane material. The generally annular inner ring **20** and the generally annular outer ring **30** and the interconnected web **40** can be made by injection or compression molding, castable polymer, or any other method generally known in the art and can be formed at the same time so that their attachment is formed by the material comprising the inner ring **20,** the outer ring **30** and the interconnected web **40** cooling and setting.

As shown in **Figure 1****,** the generally annular outer ring **30** can have a radially external surface **34** to which a tread carrying layer **70** is attached. Attachment can be done adhesively or using other methods commonly available in the art.

As shown in **Figures 1, 2** and **3****,** the interconnected web **40** of non-pneumatic tire **10** connects the generally annular inner ring **20** to the generally annular outer ring **30.** In the illustrated embodiment, the interconnected web **40** comprises at least two radially adjacent layers **56, 58** of web elements **42** that define a plurality of generally polygonal openings **50.** In other words, with at least two adjacent layers **56, 58,** a slice through any radial portion of the non-pneumatic tire **10** extending from the axis of the rotation **12** to the generally annular outer ring **30** passes through or traverses at least two generally polygonal openings **50.** The polygonal openings **50** can form various shapes. In many embodiments, a majority of generally polygonal openings **50** can be generally hexagonal shape with six sides. However, it is possible that each one of the plurality of generally polygonal openings **50** has at least three sides. In one embodiment, the plurality of generally polygonal openings **50** are either generally hexagonal in shape or hexagonal in shape circumferentially separated by openings that are generally trapezoidal in shape, as can be seen in **Figure1****,** giving interconnected web **40** a shape that can resemble a honeycomb.

A preferred range of angles between any two interconnected web elements (moving radially from the tread portion of the tire to the wheel) can be between 80 and 180 degrees (*see,* for example, the web elements of **Figure 1**). Other ranges are also possible.

With continued reference to the illustrated embodiment of **Figures 1, 2** and **3****,** the interconnected web **40** can be arranged such that one web element **42** connects to the generally annular inner ring **20** at any given point or line along the generally annular inner ring **20** such that there are a first set of connections **41** along the generally annular inner ring **20.** Likewise, one web element **42** can connect to the generally annular outer ring **30** at any given point or line along an internal surface **33** of the generally annular outer ring **30** such that there are a second set of connections **43** along the generally annular outer ring **30.** However, more than one web element **42** can connect to either the generally annular inner ring **20** or to the generally annular outer ring **30** at any given point or line.

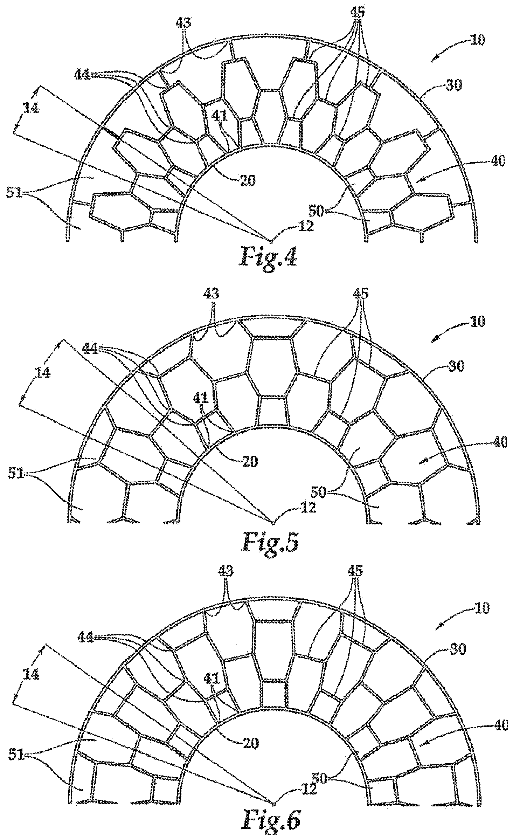

As shown in **Figures 4-9****,** the interconnected web **40** can further comprise intersections **44** between web elements **42** in order to distribute an applied load throughout the interconnected web **40.** In these illustrated embodiments, each intersection **44** joins at least three web elements **42.** However, in other embodiments, the intersections **44** can join more than three web elements **42,** which can assist in further distributing the stresses and strains experienced by web elements **42.**

With continued reference to **Figures 4-9****,** the web elements **42** can be angled relative to a radial plane **16** containing the axis of rotation **12** that also passes through web element **42.** By angling the web elements **42,** an applied load that is generally applied perpendicular to the axis of rotation **12** can be eccentrically applied to the web elements **42.** This can create a rotational or bending component of an applied load on each web element **42,** facilitating buckling of those web elements **42** subjected to a compressive load. Similarly situated web elements **42** can all be angled by about the same amount and in the same direction relative to radial planes **16.** Preferably, however, the circumferentially consecutive web elements **42,** excluding tangential web elements **45,** of a layer of plurality of generally polygonal openings **50** are angled by about the same magnitude but measured in opposite directions about radial planes such that web elements **42** are generally mirror images about radial plane **16** of one another.

In addition to the web elements **42** that are generally angled relative to radial planes **16** passing through axis of rotation **12,** the interconnected web **40** can also include tangential web elements **45,** as shown in **Figures 1-9****.** The tangential web elements **45** can be oriented such that they are generally aligned with tangents to cylinders or circles centered at axis of rotation **12.** The tangential web elements **45** are preferred because they assist in distributing applied load. For example, when the applied load is applied, the web elements **42** in a region above axis of rotation **12** are subjected to a tensile force. Without the tangential web elements **45,** interconnected web **40** may try to deform by having the other web elements **42** straighten out, orienting themselves in a generally radial direction, resulting in stress concentrations in localized areas. However, by being oriented in a generally tangential direction, the tangential web elements **45** distribute the applied load throughout the rest of interconnected web **40,** thereby minimizing stress concentrations.

With continued reference to **Figures 1-9** the plurality of generally polygonal openings **50** are shown wherein each one of the plurality of generally polygonal openings **50** is radially oriented. As noted above, the generally polygonal openings **50** can be oriented such that they are symmetrical about radial symmetry planes **14** that pass through axis of rotation **12.** This arrangement can facilitate installation by allowing tire **10** to still function properly even if it is installed backwards because it should behave in the same manner regardless of its installed orientation.

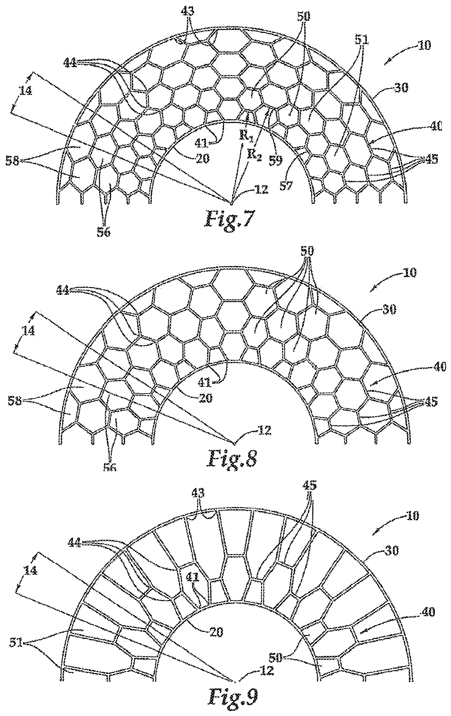

Each of the openings within the plurality of generally polygonal tubular openings **50** can, but is not required, to be similar in shape. **Figure 7****,** for example shows a first plurality of generally polygonal openings **50** that is different in shape from a second plurality of generally polygonal openings **51.** In this embodiment, at least one opening of the first plurality of general polygonal openings **50** can be smaller than at least one opening of the second plurality of generally polygonal openings **51.** **Figure 7** also shows that each generally polygonal opening in the first plurality of generally polygonal openings **50** has an inner boundary **57** spaced a radial distance, **R₁,** from axis of rotation **12** and each generally polygonal opening in the second plurality of generally polygonal openings **51,** has a second inner boundary **59** spaced a radial distance, **R₂,** which can be greater than **R₁,** from axis of rotation **12.**

The number of openings **50** within the interconnected web **40** can vary. For example, the interconnected web **40** can have five differently sized openings patterned 16 times for a total of 80 cells, such as in **Figure 1****.** In yet other embodiments, other numbers of openings **50** can be used other than 16. For example, in preferred embodiments the interconnected web **40** could include between 12-64 patterns of cells. Other numbers outside of this range are also possible.

As shown in **Figures 7** and **8****,** openings in a radially inner layer **56** can be similarly shaped as compared to those in a radially outer layer **58** but can be sized differently from those openings such that the generally polygonal openings **50** increase in size when moving from opening to opening in a radially outward direction. However, a second plurality of generally polygonal openings in a radially outer layer can also be smaller than those in a first plurality of generally polygonal openings in a radially inner layer. In addition, the second plurality of generally polygonal openings can be either circumferentially separated from each other by a third plurality of generally polygonal openings **53** or can be greater in number than the first plurality of generally polygonal openings **50,** or it can be both.

As noted above, **Figures 1-9** show several variations of a plurality of generally polygonal openings **50** that are generally hexagonally shaped. These openings can be symmetrical in one direction or in two directions. In an alternative embodiment, they are not symmetrical. For example, in **Figure 1****,** radial symmetry planes **14** bisect several of the plurality of generally polygonal openings **50.** Those openings are generally symmetrical about radial symmetry planes **14.** However, interconnected web **40** of tire **10** can also be generally symmetrical as a whole about radial symmetry planes. In comparison, a second plurality of generally polygonal openings **14** can be generally symmetrical about similar radial symmetry planes **14.** In addition, as shown in **Figures 7** and **8****,** a second plurality of generally polygonal openings can be generally symmetrical about lines tangent to a cylinder commonly centered with axis of rotation **12,** providing a second degree of symmetry.

The web elements **42** can have varying lengths from one embodiment to another or within the same embodiment. For example, the interconnected web **40** in **Figure 7** comprises web elements **42** that are generally shorter than web elements of the interconnected web shown in **Figure 6****.** As a result, interconnected web **42** can appear denser in **Figure 7****,** with more web elements **42** and more generally polygonal openings **50** in a given arc of tire **10.** **Figure 9** shows an interconnected web **40** with web elements **42** that substantially vary in length within the same interconnected web. Radially inward web elements **42** are generally shorter than web elements **42** located comparatively radially outward.

With reference back to **Figure 2****,** the combination of the geometry of interconnected web **40** and the material chosen in interconnected web **40** can enable an applied load to be distributed throughout the web elements **42.** Because the web elements **42** are preferably relatively thin and can be made of a material that is relatively weak in compression, those elements **42** that are subjected to compressive forces may have a tendency to buckle. These elements are generally between the applied load that generally passes through axis of rotation **12** and footprint region **32** and are represented as buckled section **48** in **Figure 2****.**

In one embodiment, some or all of the web elements **42** can be provided with weakened (*e.g*., previously bent) or thinned sections such that the web elements **42** preferentially bend or are biased to bend in a certain direction. For example, in one embodiment, the web elements are biased such that they bend generally in an outwardly direction. In this manner, web elements do not contact or rub against each as they buckle. In addition, the position of the weakened or thinned portion can be used to control the location of the bending or buckling to avoid such contact.

When buckling occurs, the remaining web elements **42** may experience a tensile force. It is these web elements **42** that support the applied load. Although relatively thin, because web elements **42** can have a high tensile modulus they can have a smaller tendency to deform but instead can help maintain the shape of the tread carrying layer **70.** In this manner, the tread carrying layer **70** can support the applied load on the tire **10** as the applied load is transmitted by tension through the web elements **42.** The tread carrying layer **70,** in turn, acts as an arch and provides support. Accordingly, the tread carrying layer **70** is sufficiently stiff to support the web elements **42** that are in tension and supporting the load. A substantial amount of the applied load may be supported by the plurality of the web elements working in tension. For example, in one embodiment, at least 75% of the load is supported in tension, in another embodiment at least 85% of the load is supported in tension and in another embodiment at least 95 % of the load is supported in tension. In other embodiments, less than 75% of the load can be supported in tension.

Although the generally annular inner ring **20,** the generally annular outer ring **30,** and the interconnected web **40** can be constructed of the same material, they can all have different thicknesses. That is, the generally annular inner ring can have a first thickness, **tᵢ,** the generally annular outer ring can have a second thickness, **tₒ,** and the interconnected web can have a third thickness, **tₑ.** In the embodiment shown in **Figure 1****,** the first thickness **tᵢ** can be less than the second thickness **tₒ.** However, the third thickness, **tₑ,** can be less than either first thickness, **tᵢ,** or the second thickness, **tₒ.** Thinner web elements **42** buckles more easily when subjected to a compressive force whereas a relatively thicker generally annular inner ring **20** and the generally annular outer ring **30** can advantageously help maintain lateral stiffness of non-pneumatic tire **10** in an unbuckled region by better resisting deformation.

The thickness, **tₑ,** of web elements **42** can vary, depending on predetermined load capability requirements. For example, as the applied load increases, the web elements **42** can increase in thickness, **tₑ,** to provide increased tensile strength, reducing the size of the openings in the plurality of generally polygonal openings **50.** However, the thickness, **tₑ,** should not increase too much so as to inhibit buckling of those web elements **42** subject to a compressive load. As with choice of material, the thickness, **tₑ,** can increase significantly with increases in the applied load. For example, in certain non-limiting embodiments, each web element **42** of interconnected web **40** can have a thickness, **tₑ** between about 0.04 inch and 0.1 inch thick for tire loads of about 0-1000 pounds, between about 0.1 and 0.25 inch thick for loads of about 500-5000 pounds, and between 0.25 and 0.5 inch thick for loads of about 2000 pounds or greater. Those of skill in the art will recognize that these thicknesses can be decreased or increased in modified embodiments.

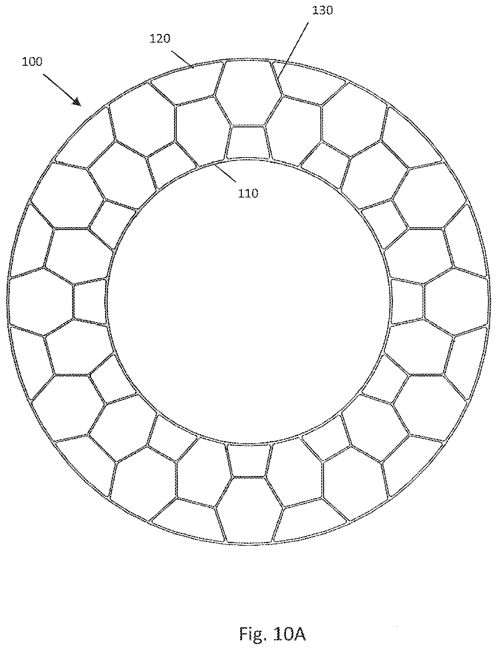

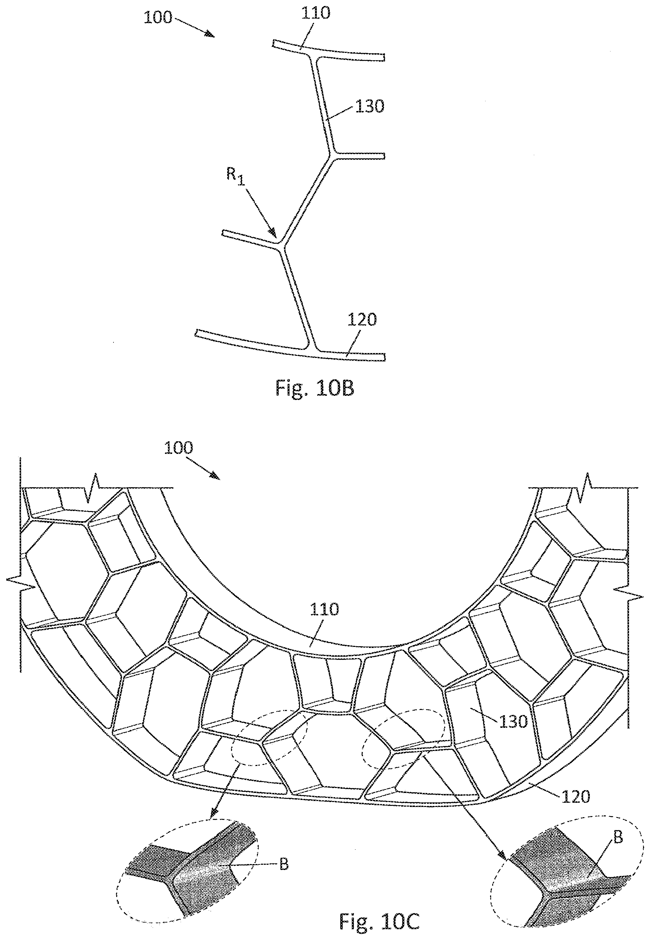

While the embodiments illustrated in **Figures 1-9** include web elements **42** that each have a substantially constant thickness, **tₑ,** in alternative embodiments, the thickness of one or more web elements may vary. Exemplary effects of such variance are illustrated in **Figures 10-14****.**

Figures 10A-C illustrate a reference tire **100** having a generally annular inner ring **110,** a generally annular outer ring **120,** and a plurality of web elements **130** that define polygonal openings. **Figure 10A** provides a front of tire **100** in an undeformed state and **Figure 10B** is a detail view of a portion of a web of the tire **100.** In this particular embodiment, the web elements **130** form a plurality of hexagonal and substantially trapezoidal shapes, including an outer series of alternating hexagonal and trapezoidal opening and an inner series of alternating hexagonal and trapezoidal openings. The inner and outer openings are aligned such that a radial plane that bisects an inner hexagonal opening would also bisect an outer trapezoidal opening, and a radial plane that bisects an inner trapezoidal opening would also bisect an outer trapezoidal opening. In this embodiment, the radial plane that bisects an inner opening would only pass through two openings-the inner opening and a corresponding outer opening. It should be understood, however, that this arrangement is merely exemplary and is being used for illustrative purposes. In alternative embodiments, web elements that form any shape may be employed.

In the illustrated embodiment, each of the web elements **130** has substantially the same thickness along its length. As can be seen in **Figure 10B****,** each vertex of each polygonal opening is defined by a small radius **R₁.** The small radius **R₁** is much smaller than the radial distance between the inner ring **110** and outer ring **120,** and much smaller than the length of any given web element **130.** Thus, there is only a negligible widening of each web element **130** as it approaches a vertex.

In one exemplary embodiment, the inner ring **110** has a diameter of 12.690 inches (32.232 cm) and the outer ring **120** has a diameter of 21.917 inches (55.669 cm). Thus, the radial distance between the inner ring **110** and the outer ring **120** is 4.614 inches (11.720 cm). In this embodiment, the web elements **130** have lengths between 1.508 inches (3.830 cm) and 1.798 inches (4.567 cm), and a thickness of 0.080 inches (0.203 cm). Each vertex is defined by a small radius **R₁** of 0.1 inches (0.254 cm). However, it should be understood that the tire **100** may have any dimensions such that the radius at the vertices of each web element **130** is less than or equal to 125% of the mean element thickness.

**Figure 10C** is a perspective view of a lower portion of the web being deformed when subjected to a load. **Figure 10C** further includes detail views of selected regions to illustrate exemplary stresses on the web elements. In this embodiment, the web elements **130** are subject to high stresses at each vertex as the tire **100** rotates while subjected to a load. Moreover, the high stresses are concentrated in a narrow band **B.**

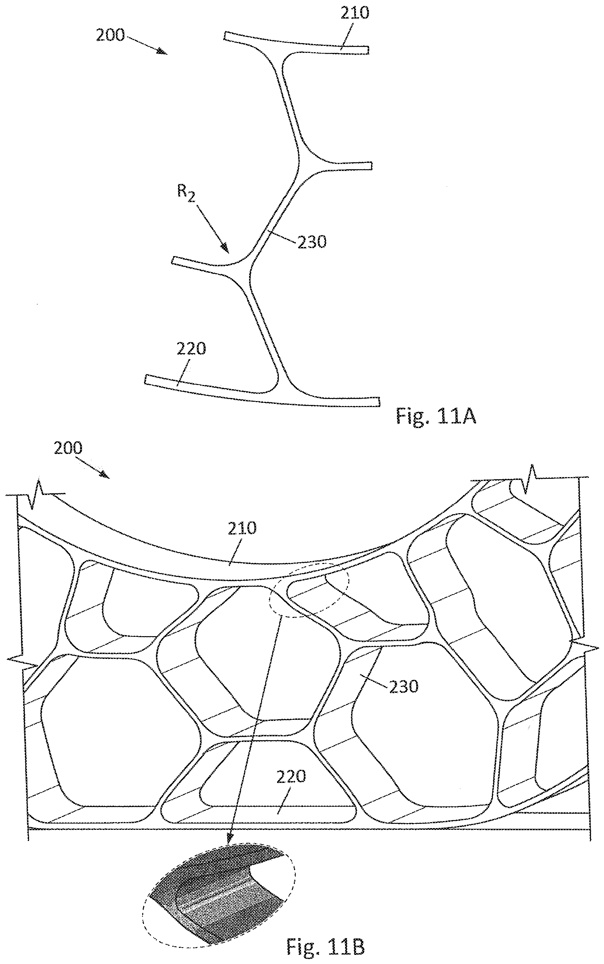

By contrast, Figures 11A-B illustrate a first variable thickness tire **200,** *i.e.,* a non-pneumatic tire with a web having a variable thickness defined by a larger radius at each vertex. **Figure 11A** is a detail view of a web of the first variable thickness tire **200,** including a generally annular inner ring **210,** a generally annular outer ring **220,** and a plurality of web elements **230** that define polygonal openings. The first variable thickness tire **200** has the same shapes and dimensions as the reference tire **100,** except that each vertex of each polygonal opening is defined by a medium radius **R₂.**

In one exemplary embodiment, the first variable thickness tire **200** has the same dimensions as those described for the exemplary reference tire **100,** except the medium radius **R₂** is 0.5 inches (1.27 cm). Thus, the first variable thickness tire **200** is dimensioned such that the radius at the vertices of each web element **230** is 625% of the mean element thickness. In one embodiment, the radius is selected to be 400% to 800% of the mean element thickness. In other embodiments, the radius is selected to be greater than 125% of the mean element thickness.

**Figure 11B** is a perspective view of a lower portion of a web of the first variable thickness tire **200** being deformed when subjected to a load. **Figure 11B** further includes detail views of selected regions to illustrate exemplary stresses on the web elements. In this embodiment, when compared to the reference tire **100** the web elements **230** are subject to relatively lower stresses at each vertex as the tire **200** rotates while subjected to a load. Additionally, the small radius transition was effective at removing the narrow stress band. However, the location of high stress concentration changed and resulted in an even higher stress value, and the stresses are still more highly concentrated than may be desirable.

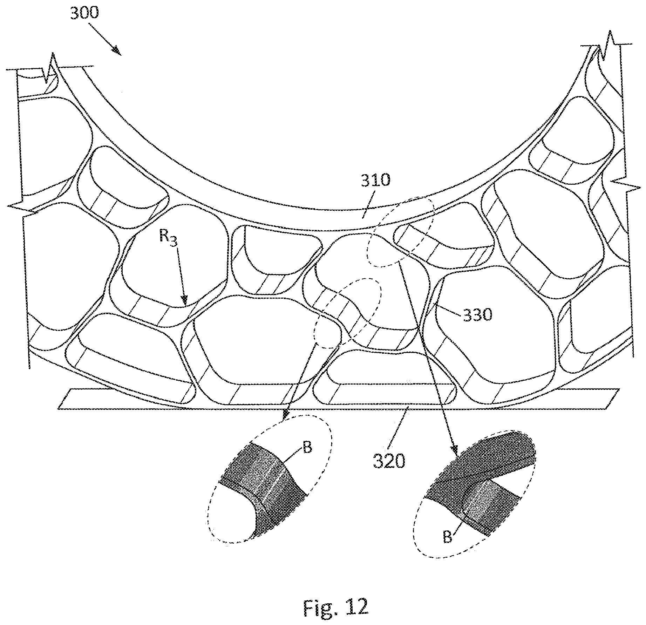

**Figure 12** is a perspective view of a lower portion of a web of a second variable thickness tire **300.** Here, the web has a variable thickness defined by a larger radius at each vertex. **Figure 12** further includes detail views of selected regions to illustrate exemplary stresses on the web elements. The second variable thickness tire **300** has a generally annular inner ring **310,** a generally annular outer ring **320,** and a plurality of web elements **330** that define polygonal openings. The second variable thickness tire **300** has the same shapes and dimensions as the reference tire **100,** except that each vertex of each polygonal opening is defined by a large radius **R₃.**

In one exemplary embodiment, the second variable thickness tire **300** has the same dimensions as those described for the exemplary reference tire **100,** except the large radius **R₃** is 0.7 inches (1.78 cm). Thus, the second variable thickness tire **300** is dimensioned such that the radius at the vertices of each web element **330** is 875% of the mean element thickness. In one embodiment, the radius is selected to be 800% to 1000% of the mean element thickness.

In this embodiment, when compared to the reference tire **100** the web elements **330** are subject to higher stresses at each vertex as the tire **300** rotates while subjected to a load. The large radius **R₃** results in too much material at the junctions, reducing the effective length of the flexible section of each web element **330.** The stresses are concentrated in a slightly wider band **B,** which has shifted to yet another location.

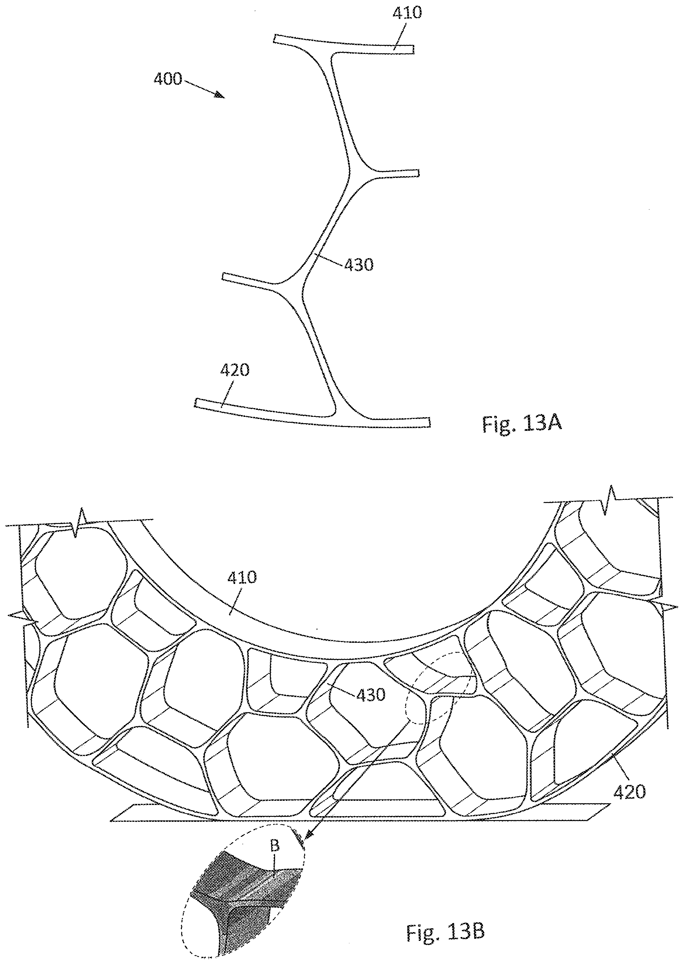

Figures 13A-B illustrate a third variable thickness tire **400,** *i.e.,* a non-pneumatic tire with a web having a variable thickness defined by an elliptical transition at each vertex. **Figure 13A** is a detail view of a web of the third variable thickness tire **400,** including a generally annular inner ring **410,** a generally annular outer ring **420,** and a plurality of web elements **430** that define polygonal openings. The third variable thickness tire **400** has the same shapes and dimensions as the reference tire **100,** except that each vertex of each polygonal opening is defined by an elliptical transition.

In one exemplary embodiment, the third variable thickness tire **400** has the same dimensions as those described for the exemplary reference tire **100,** except where the vertices include an elliptical portion. The elliptical shape allows for a two dimension definition of the transition. The use of an elliptical shape also allows for a reduction of material at each of the vertices that resulted from the use of a simple radius. The extra material from the simple radius contributed to the inflexible behaviors that were observed during tests.

**Figure 13B** is a perspective view of a lower portion of the web of the third variable thickness tire **400** being deformed when subjected to a load. **Figure 13B** further includes detail views of selected regions to illustrate exemplary stresses on the web elements **430.** In this embodiment, the web elements **430** are subject to significantly lower stresses at each vertex as the tire **400** rotates while subjected to a load. The stresses are distributed in a wider band near the outer ring **420,** but are still concentrated in a narrow band **B** near the inner ring **410.** Ultimately, this embodiment still included too much material at the transitions.

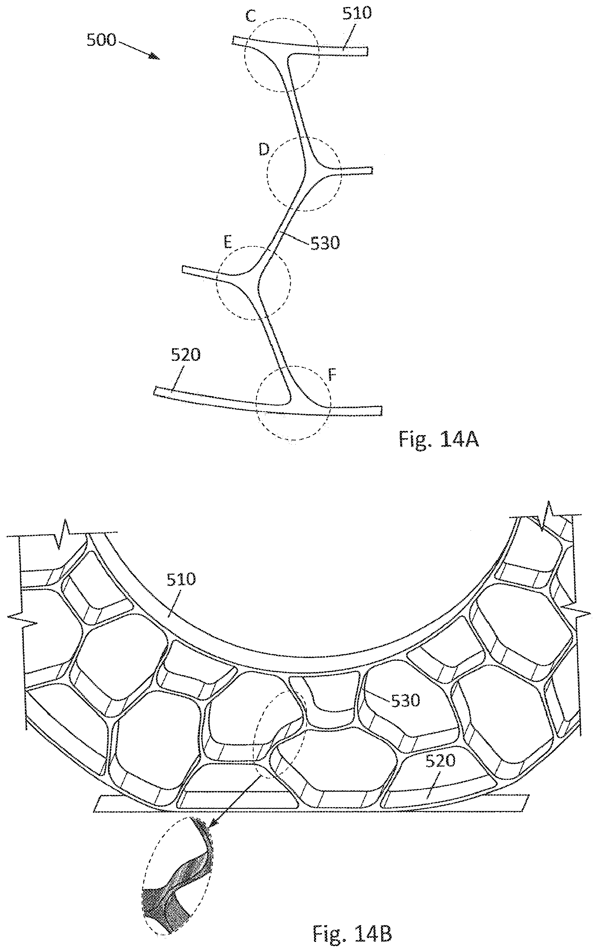

**Figures 14A-14F** illustrate a fourth variable thickness tire **500,** *i.e.,* a non-pneumatic tire with a web having a variable thickness defined by variable transitions at each vertex. **Figure 14A** is a detail view of a web of the fourth variable thickness tire **500,** including a generally annular inner ring **510,** a generally annular outer ring **520,** and a plurality of web elements **530** that define polygonal openings. The fourth variable thickness tire **500** has the same shapes and dimensions as the reference tire **100,** except that each vertex of each polygonal opening is defined by a selected radial or spline transition.

**Figure 14B** is a perspective view of a lower portion of the web of the fourth variable thickness tire **500** being deformed when subjected to a load. **Figure 14B** further includes detail views of selected regions to illustrate exemplary stresses on the web elements **530.** In this embodiment, the web elements **530** are subject to significantly lower stresses at each vertex as the tire **500** rotates while subjected to a load. The stresses are distributed in wide bands throughout the webbing. In one embodiment, the use of fully variable transitions led to approximately a 30% reduction of peak stress under normal operations.

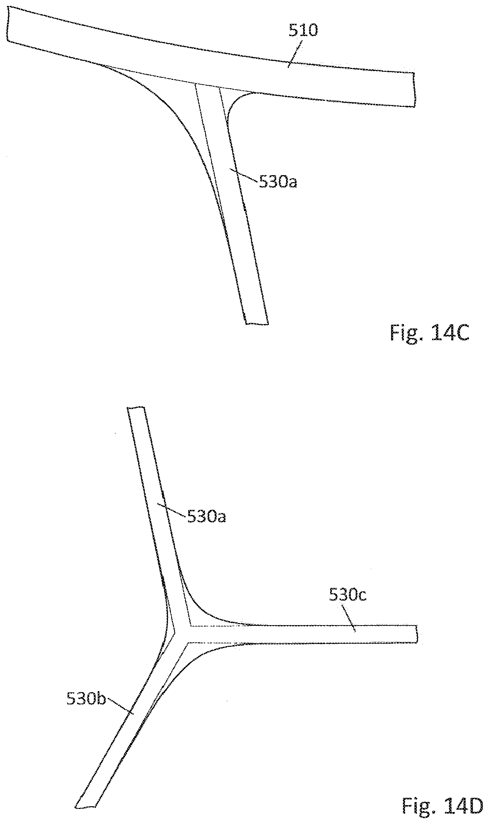

Examples of the variable transitions are shown further in the detail views of **Figures 14C-14F****.**

**Figure 14C** is a detail view of the area **C** of **Figure 14A****.** In this area, two vertices between an inner web element **530a** and the inner ring **510** are shown. From this view, an obtuse left-side angle and an acute right-side angle are formed between the inner web element **530a** and the inner ring **510.** The obtuse left-side angle is smoothed by a manually shaped spline that adds more material to the left of the center line of the inner web element **530a.** The acute right-side angle is smoothed by a small, simple radius.

**Figure 14D** is a detail view of the area **D** of **Figure 14A****.** In this area, three vertices are shown, including a left vertex between the inner web element **530a** and an intermediate web element **530b,** an upper right vertex between the inner web element **530a** and an inner radial web element **530c,** and a lower right vertex between the intermediate web element **530b** and the inner radial web element **530c.** In this area, all three vertices are defined by manually shaped splines.

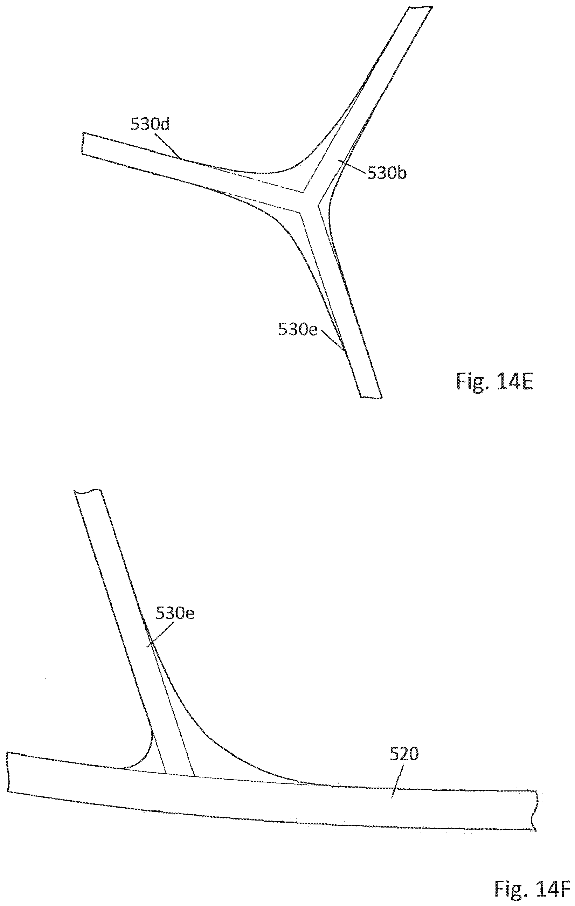

**Figure 14E** is a detail view of the area **E** of **Figure 14A****.** In this area, three vertices are shown, including an upper left vertex between the intermediate web element **530b** and an outer radial web element **530d,** a right vertex between the intermediate web element **530b** and an outer web element **530e,** and a lower left vertex between the outer radial web element **530d** and the outer web element **530e.** In this area, all three vertices are defined by manually shaped splines.

**Figure 14F** is a detail view of the area **F** of **Figure 14A****.** In this area, two vertices between the outer web element **530e** and the outer ring **520** are shown. From this view, an acute left-side angle and an obtuse right-side angle are formed between the outer web element **530e** and the outer ring **520.** The obtuse right-side angle is smoothed by a manually shaped spline that adds more material to the left of the center line of the outer web element **530e.** The acute left-side angle is smoothed by a small, simple radius.

While the specific transitions of **Figures 14A-14F** are described above, it should be understood that each transition should be determined according to the particular geometry of a non-pneumatic tire and its associated webbing. In one embodiment, machine learning or other artificial intelligence may be employed in the selection of the transition.

To the extent that the term "includes" or "including" is used in the specification or the claims, it is intended to be inclusive in a manner similar to the term "comprising" as that term is interpreted when employed as a transitional word in a claim. Furthermore, to the extent that the term "or" is employed (e.g., A or B) it is intended to mean "A or B or both." When the applicants intend to indicate "only A or B but not both" then the term "only A or B but not both" will be employed. Thus, use of the term "or" herein is the inclusive, and not the exclusive use. See, Bryan A. Garner, A Dictionary of Modern Legal Usage 624 (2d. Ed. 1995). Also, to the extent that the terms "in" or "into" are used in the specification or the claims, it is intended to additionally mean "on" or "onto." Furthermore, to the extent the term "connect" is used in the specification or claims, it is intended to mean not only "directly connected to," but also "indirectly connected to" such as connected through another component or components.

While the present disclosure has been illustrated by the description of embodiments thereof, and while the embodiments have been described in considerable detail, it is not the intention of the applicants to restrict or in any way limit the scope of the appended claims to such detail. Additional advantages and modifications will readily appear to those skilled in the art. Therefore, the disclosure, in its broader aspects, is not limited to the specific details, the representative system and method, and illustrative examples shown and described. Accordingly, departures may be made from such details without departing from the spirit or scope of the applicant's general inventive concept.

### Clauses

1. A non-pneumatic tire comprising:
   a generally annular inner ring having an axis of rotation;
   a deformable generally annular outer ring; and
   a flexible interconnected web extending between the inner and the outer ring, the interconnected web including at least two radially adjacent layers of web elements at every radial cross-section of the tire, the web elements defining a plurality of generally polygonal openings and including a plurality of radial web elements that are angled relative to a plane that extends radially through the axis of rotation and a plurality of distinct tangential web elements that are generally transverse to the radial plane,
      wherein each generally polygonal opening is defined by a plurality of vertices,
      wherein each of the plurality of vertices is defined by a transitional element that varies a thickness of an associated web element along at least a portion of a length of the web element,
      wherein the transitional element is selected from the group consisting of a radius, an elliptical transition, and a spline, and
      wherein when load is applied, a substantial amount of the load is supported by a plurality of the web elements working in tension,
      wherein a plurality of the radial web elements in a region above the axis of rotation are subjected to a tensile force while at least some of the radial web elements in a region between the load and a footprint region buckle and a plurality of the tangential web elements distribute the load through the flexible interconnected web.
2. The non-pneumatic tire of clause 1, wherein the plurality of vertices include a first plurality of vertices defined by a radius and a second plurality of vertices defined by a spline.
3. The non-pneumatic tire of clause 1, wherein the plurality of vertices include a plurality of vertices defined by a radius.
4. The non-pneumatic tire of clause 3, wherein the radius is greater than 125% of a mean element thickness.
5. The non-pneumatic tire of clause 1, further comprising a tread carrying layer affixed to a radially external surface of the outer ring, the tread carrying layer support supporting the web elements working in tension.
6. The non-pneumatic tire of clause 1, wherein the plurality of generally polygonal openings comprises a first plurality of generally polygonal openings having a first shape and a second plurality of generally polygonal openings having a second shape different from the first shape.
7. The non-pneumatic tire of clause 6, wherein the first plurality of generally polygonal openings includes a plurality of inner hexagonal openings and a plurality of outer hexagonal openings, and wherein the second plurality of generally polygonal openings includes a plurality of inner trapezoidal openings and a plurality of outer trapezoidal openings.
8. The non-pneumatic tire of clause 7, wherein a radial plane that bisects an inner hexagonal opening would also bisect an outer trapezoidal opening, and a radial plane that bisects an inner trapezoidal opening would also bisect an outer trapezoidal opening.
9. A method of designing a non-pneumatic tire, the method comprising:
   providing a generally annular inner ring having an axis of rotation;
   providing a deformable generally annular outer ring; and
   connecting the inner ring to the outer ring with a flexible interconnected web having at least two radially adjacent layers of web elements at every radial cross-section of the tire, such that the web elements define a plurality of generally polygonal openings having a plurality of vertices, and such that the web elements include a plurality of radial web elements that are angled relative to a plane that extends radially through the axis of rotation and a plurality of distinct tangential web elements that are generally transverse to the radial plane,
      wherein the step of connecting the inner ring to the outer ring includes selecting a thickness of each web element such that when a load is applied, a substantial amount of the load is supported by a plurality of the web elements working in tension,
      wherein a plurality of the radial web elements in a region above the axis of rotation are subjected to a tensile force while at least some of the radial web elements in a region between the load and a footprint region buckle and a plurality of the tangential web elements distribute the load through the flexible interconnected web, and
      wherein the step of connecting the inner ring to the outer ring includes selecting a transitional element for each of the plurality of vertices, such that a thickness of an associated web element is varied along at least a portion of a length of the web element.
10. The method of clause 9, wherein the step of selecting a transitional element includes selecting a transitional element from the group consisting of a radius, an elliptical transition, and a spline.
11. The method of clause 9, wherein the step of selecting a transitional element includes selecting a plurality of vertices defined by a spline and a plurality of vertices defined by a radius.
12. The method of clause 9, wherein the step of selecting a transitional element is performed by a machine learning process.
13. The method of clause 9, further comprising selecting a material for the inner ring, the outer ring, and the flexible interconnected web.
14. The method of clause 13, wherein the step of selecting a material for the inner ring, the outer ring, and the flexible interconnected web includes selecting a same material for the inner ring, the outer ring, and the flexible interconnected web.
15. The method of clause 13, wherein the step of selecting a thickness of each web element includes selecting the thickness according to material properties of the selected material.

## Claims

1. A non-pneumatic tire comprising:
a generally annular inner ring having an axis of rotation;
a deformable generally annular outer ring; and
a flexible interconnected web extending between the inner and the outer ring, the interconnected web including at least two radially adjacent layers of web elements at every radial cross-section of the tire, the web elements defining a plurality of generally polygonal openings and including a plurality of radial web elements that are angled relative to a plane that extends radially through the axis of rotation and a plurality of distinct tangential web elements that are generally transverse to the radial plane,
wherein each generally polygonal opening is defined by a plurality of vertices,
wherein each of the plurality of vertices is defined by an elliptical transitional element that varies a thickness of an associated web element along at least a portion of a length of the web element,
wherein when load is applied, a substantial amount of the load is supported by a plurality of the web elements working in tension,
wherein a plurality of the radial web elements in a region above the axis of rotation are subjected to a tensile force while at least some of the radial web elements in a region between the load and a footprint region buckle and a plurality of the tangential web elements distribute the load through the flexible interconnected web.

2. The non-pneumatic tire of claim 1, wherein each elliptical transitional element forms a single concave surface at each of the plurality of vertices, without any protruding surface.

3. The non-pneumatic tire of claim 1, wherein each of the web elements has a mean thickness between 0.04 inches and 0.5 inches.

4. The non-pneumatic tire of claim 1, wherein at least 75% of the load is supported in tension.

5. The non-pneumatic tire of claim 1, wherein the inner ring, the outer ring, and the flexible interconnected web are all constructed of the same material.

6. The non-pneumatic tire of claim 1, further comprising a tread carrying layer affixed to a radially external surface of the outer ring, the tread carrying layer support supporting the web elements working in tension.

7. The non-pneumatic tire of claim 1, wherein the plurality of generally polygonal openings comprises a first plurality of generally polygonal openings having a first shape and a second plurality of generally polygonal openings having a second shape different from the first shape.

8. The non-pneumatic tire of claim 7, wherein the first plurality of generally polygonal openings includes a plurality of inner hexagonal openings and a plurality of outer hexagonal openings, and wherein the second plurality of generally polygonal openings includes a plurality of inner trapezoidal openings and a plurality of outer trapezoidal openings,
and optionally, wherein a radial plane that bisects an inner hexagonal opening would also bisect an outer trapezoidal opening, and a radial plane that bisects an inner trapezoidal opening would also bisect an outer trapezoidal opening.

9. A method of designing a non-pneumatic tire, the method comprising:
providing a generally annular inner ring having an axis of rotation;
providing a deformable generally annular outer ring; and
connecting the inner ring to the outer ring with a flexible interconnected web having at least two radially adjacent layers of web elements at every radial cross-section of the tire, such that the web elements define a plurality of generally polygonal openings having a plurality of vertices, and such that the web elements include a plurality of radial web elements that are angled relative to a plane that extends radially through the axis of rotation and a plurality of distinct tangential web elements that are generally transverse to the radial plane,
wherein the step of connecting the inner ring to the outer ring includes selecting a thickness of each web element such that when a load is applied, a substantial amount of the load is supported by a plurality of the web elements working in tension,
wherein a plurality of the radial web elements in a region above the axis of rotation are subjected to a tensile force while at least some of the radial web elements in a region between the load and a footprint region buckle and a plurality of the tangential web elements distribute the load through the flexible interconnected web, and
wherein the step of connecting the inner ring to the outer ring includes selecting an elliptical transitional element for each of the plurality of vertices, such that a thickness of an associated web element is varied along at least a portion of a length of the web element.

10. The method of claim 9, wherein each elliptical transitional element forms a single concave surface at each of the plurality of vertices, without any protruding surface.

11. The method of claim 9, wherein the selecting of a thickness of each web element includes selecting a thickness of each of web element such that each web element has a mean thickness between 0.04 inches and 0.5 inches.

12. The method of claim 9, wherein at least 75% of the load is supported in tension.

13. The method of claim 9, wherein the step of selecting a transitional element is performed by a machine learning process.

14. The method of claim 9, further comprising selecting a material for the inner ring, the outer ring, and the flexible interconnected web.

15. The method of claim 14:
(a) wherein the step of selecting a material for the inner ring, the outer ring, and the flexible interconnected web includes selecting a same material for the inner ring, the outer ring, and the flexible interconnected web; or
(b) wherein the step of selecting a thickness of each web element includes selecting the thickness according to material properties of the selected material.
